# EUROPEAN PATENT APPLICATION

(11) **EP 2 472 740 A1**
(43) Date of publication of application: **04.07.2012**
(21) Application number: 10197423.6
(22) Date of filing: 30.12.2010
(51) Int. Cl.: H04B 7/26

(54) **Wireless train communication system**

(71) Applicant: Icomera AB, 411 04 Göteborg (SE)
(72) Inventor: Karlsson, Mats, 411 04, GÖTEBORG (SE)
(74) Representative: Lind, Urban Arvid Oskar

(57) **Abstract**

A wireless train communication system is disclosed, wherein the system comprises: at least one repeater unit for receiving and transmitting wireless voice communication; a data communication router for receiving and transmitting wireless data communication; and at least one distributed antenna, such as a leaky feeder, extending over several carriages of the train. The distributed antenna is connected to the repeater unit and the data communication router for providing distributed access to the repeater unit and the data communication router to mobile terminals in the carriages.

## Description

### Technical field of the invention

The present invention relates to a wireless train communication system.

### Background

There is today an increasing demand from passengers to be able to communicate through mobile phones and other handheld terminals when travelling on trains, and also to be able to get access to the Internet with laptops, PDAs etc. However, train carriages are made of metal, and even the windows are normally covered with a metal film. Accordingly, train carriages are shielded compartments, and direct communication between terminal antennas within the carriages and externally located antennas is difficult to obtain.

To this end, train carriages are often provided with an external antenna connected to a repeater unit within the carriage, which in turn is connected to an internal antenna. Hence, the communication between the passengers' terminals and the operator antennas outside the trains occurs through the repeater unit. Similarly, it is known to provide a mobile access router, also connected both to an external antenna and an internal antenna, in each carriage, in order to provide Internet access on-board the train. Such mobile access router solutions are e.g. commercially available from the applicant of the present application, Icomera AB, of Gothenburg, Sweden.

However, today's systems are not entirely satisfactory. Trains often pass through areas with bad radio coverage, and the repeater units, nowadays handling both traditional voice communication and data communication through e.g. 3G and 4G, are often unable to handle the required traffic. As a consequence, telephone conversations will often be disrupted and disconnected inadvertently.

Another drawback with today's systems is that there is a frequent need for upgrading of the systems, since the repeater units need to be able to handle all available frequency bands and be up to date with all new system requirements. This means that several units in each carriage frequently need to be replaced, which is a very costly procedure. It is also difficult to supervise the operation of the different components of the system, which leads to cumbersome and costly error detections etc in cases of malfunction. As a consequence, the operation performance is often deteriorated due to problems not being recognized.

Another drawback with today's systems is that the repeater units and the mobile access router require a significant amount of space and power. Consequently, these units need to be placed in a separate cooled compartment on the train. Since both power and space is a scarce resource on-board a train, this significantly adds to the costs of using the known systems.

Still another drawback with today's systems is that is difficult or even impossible to implement new and more efficient transmission solutions, such as MIMO.

There is therefore a need for an improved train communication system which provides better capacity and/or lowers the overall costs of installing and maintaining the system.

### Summary of the invention

It is therefore an object of the present invention to provide a wireless train communication system which alleviates all or at least some of the above-discussed drawbacks of the presently known systems. Another object of the invention is to provide a wireless train communication system which, to a relatively low cost, provides good data and voice communication to a plurality of users.

This object is achieved by means of a wireless train communication system as defined in the appended claims.
According to the present invention, there is provided a wireless train communication system, comprising:
at least one repeater unit for receiving and transmitting wireless voice communication;
a data communication router for receiving and transmitting wireless data communication; and
at least one distributed antenna extending over several carriages of said train, wherein said distributed antenna is connected to said repeater unit and said data communication router for providing distributed access to said repeater unit and said data communication router to mobile terminals in said carriages.

The present invention enables a system which at the same time is very cost-efficient and provides very good communication capabilities, both for voice and data, and enables the system to be used simultaneous by a plurality of users.

By means of the present invention, voice and data traffic are separated by the provision of at least one repeater unit for receiving and transmitting wireless voice communication and at least one data communication router for receiving and transmitting wireless data communication. However, even though the repeater unit for receiving and transmitting wireless voice communication is primarily intended for voice traffic, it is to be understood that this repeater unit may also, to a limited extent, handle data traffic, and e.g. such data traffic which is forwarded through the 900 and 1800 frequency bands. Further, the data handled by the data communication router may be related to voice data, e.g. when used for voice over IP (Internet telephony).

The present invention provides a centralized system, having a central system with one or several repeater units and a mobile access router, and preferably a mobile access and applications router, in one carriage, and a distributed access to said units in several carriages. The distributed antenna forms a very long access point instead of the present solution with multiple, separately operated access points.

Hereby, several advantages are obtained. Due to the centralization of the system, installation and upgrading becomes much simpler and more cost-efficient. Instead of having to replace and/or upgrade units in each carriage, only a few units need to be replaced and/or upgraded. Further, most updates, such as adaptation to new networks, can in the present system be made solely in the data communication router, since most such updates are related to data communication and not voice communication. Consequently, the repeater units only rarely need to be updated or exchanged. The data communication router can be updated relatively simply, e.g. by replacing or adding a new modem to the router. Consequently, there is a dramatic decrease in cost for installation and service

Further, this solution enables users with terminals to get access to voice telephony and data traffic at all locations within the train.

Since the repeater units are dedicated to voice traffic, the amount of traffic through said repeater units decrease, which results in better coverage and conditions, and better capacity for the voice communication. The result is that more calls can be handled simultaneously, and with fewer inadvertently disconnected calls.

Further, the previously known solutions require a large amount of power. Typically more than 400 W / carriage is necessary for the operation of the repeater units alone. This also leads to a significant heat generation, and a need to place the repeater units in separate cooled compartments. On the contrary, the presently proposed system can be operated with significantly lower power. Typically, the system requires only 70 W for all of the several carriages connected to the system. This results in great savings in respect of the power consumption on the train, and also leads to significantly less heat generation, and separate cooling and the like is no longer necessary. Consequently, the units may be placed in any location on the train, and for example in an overhead compartment - a space which is rarely used. Consequently, the space utilization in the carriages becomes much more efficient.

The distributed antenna typically provides transmission to and from the passenger terminals in a very broad frequency range, such as in the range of 80 MHz - 2.5 GHz. This frequency range enables a very efficient use of terminals on the train, and also enables a relatively long distributed antenna to be used. It has been found by the present inventor that this particular frequency range is very well suited for distributed antenna(s) of about 50 meters, and e.g. two such distributed antennas each extending 50 meters in the forward and the rearward direction of the train, respectively. Such a length makes it possible to cover several carriages, as will be explained further below. However, it is also possible to cover higher frequencies e.g. by using shorter distributed antennas.

The data communication router is preferably connected to the distributed antenna through at least one mobile access point.

Distributed antenna is in this application used in the sense of a network of spatially separated antenna nodes connected to a common source via a transport medium. The transport medium is preferably a cable, and the antenna nodes may e.g. be distributed apertures in the shield of the cable. The distributed antenna is preferably a passive antenna system, where the only active antenna elements are provided in or in the vicinity of the common source.

In a preferred embodiment, the distributed antenna is a leaky feeder. However, other realizations of the distributed antenna are possible. Several such alternative realizations are e.g. disclosed in US 2007/0176840, said document hereby incorporated by reference.

In case a leaky feeder is used as distributed antenna, the end of the leaky feeder remote from the source is preferably terminated with a conventional antenna, which simultaneously provides a termination resistance and an increased radiation at the terminal end.

The distributed antenna preferably comprises a section for each carriage, and releasable connections for connecting the sections between carriages. Hereby, exchange and connection/disconnection of carriages in the train set become possible without affecting the wireless communication system.

The at least one repeater unit is preferably arranged to receive and transmit wireless voice communication on said distributed antenna in frequency band(s) essentially only used for voice communication. For example, it is possible to limit the communication through the repeater unit(s) to only two frequency bands. Specifically, this communication may be limited only to the GSM frequency bands of 900 and 1800 MHz. These frequency bands are standard frequency bands for TDMA channeling within the GSM standard, and used primarily for voice communication. Hereby, the capacity of the repeater units are used essentially solely for voice communication, and consequently, more calls can be handled simultaneously, and there is a decreased risk of disturbances and inadvertent disconnection and the like. Further, repeaters dedicated to one or a few frequencies are also simpler and less costly. However, it is to be understood that even though the 900 and 1800 frequency bands are presently primarily used for GSM, these frequency bands may also be used for other standards, such as LTE (Long Term Evolution, part of the 3GPP, 3^{rd} Generation Partnership Project).

Preferably, two distributed antennas are provided, one extending in the forward direction of the train and one extending in the rearward direction of the train. Hereby, the requirements of each distributed antenna may be limited. The one or more distributed antenna preferably has a length in the range of 20-100 m, and preferably in the range 30-70 m, and most preferably in the range 40-60 m. Further, it is preferred that the distributed antenna(s) extends over at least two carriages, and preferably extends over at least four carriages. In case two distributed antennas are used, each may extend through two additional carriages, in the forward and rearward direction, respectively. About four carriages is also a very common size for train sets, and accordingly, a wireless communication system of the present invention would in most cases be sufficient to cover the whole train set.

The system further preferably comprises at least one antenna arranged externally on the train connected to the at least one repeater unit, and at least one antenna arranged externally on the train connected to the data communication router. Alternatively, it is possible to use a common antenna for both the repeater unit(s) and the data communication router. However, it is also possible to use more than two antennas.

Preferably, the system comprises at least two antennas arranged externally on the train connected to the data communication router. This enables the use of MIMO (multiple-input and multiple-output) and/or antenna diversity for the external communication to and from the data router. Hereby the data communication router may comprise several antenna ports per modem, enabling MIMO for the external communication, and the high bandwidth thereby provided can then be distributed to the internal clients on the train with e.g. 802.11 n.

The system is further preferably arranged to receive GPS signals, and to forward said GPS signals to the at least one distributed antenna, wherein said distributed antenna provides distributed access to said GPS signals to mobile terminals in said carriages. Hereby, it becomes possible, to a low additional cost, also to provide GPS data to the passenger terminals.

Still further, the system may also be arranged to receive FM radio signals, and to forward said FM radio signals to the at least one distributed antenna, wherein said distributed antenna provides distributed access to said FM radio signals to mobile terminals in said carriages.

The data communication router is preferably arranged to communicate on at least two different communication routes having different characteristics. Hereby, the communication can be automatically optimized based on specific conditions, such as price, speed, etc. Such data communication routers are known from EP 1 175 757 by the same applicant, said document hereby incorporated by reference. Such routers are also commercially available from the applicant, Icomera AB. Hereby, the router may use all available data channels, such as two or more of e.g. GSM, Satellite, DVB-T, HSPA, EDGE, 1X RTT, EVDO, LTE, WiFi (802.11) and WiMAX; and combine them into one virtual network connection. An automatic selection is then made among the available channels to use the most cost effective combination that fulfils the users' availability, bandwidth and reliability requirements. Hence, a seamless distribution of the data among said different channels is obtained.

By means of the present invention, it is also possible to have one of the units supervising the operation and function of the other units. For example, the data communication router may be arranged to supervise the function of the repeater unit(s). Hereby, the operation of the repeater unit(s) may be monitored and supervised in real-time, and information may be sent to one or several supervisor either continuously, at certain time periods or when something extraordinary, such as a malfunction, occurs.

These and other features and advantages of the present invention will in the following be further clarified with reference to the embodiments described hereinafter.

### Brief description of the drawings

For exemplifying purposes, the invention will be described in closer detail in the following with reference to embodiments thereof illustrated in the attached drawings, wherein:
Fig 1 is an schematic illustration of a train set comprising a wireless communication system in accordance with an embodiment of the present invention; and
Fig 2 is a more detailed block diagram of a wireless communication system in accordance with an embodiment of the present invention.

### Detailed description of preferred embodiments

In the following detailed description, preferred embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations of the invention. Even though in the following description, numerous specific details are set forth to provide a more thorough understanding of e present invention, it will be apparent to one skilled in the art that the present invention may be practiced without these specific details. In other instances, well known constructions or functions are not described in detail, so as not to obscure the present invention.

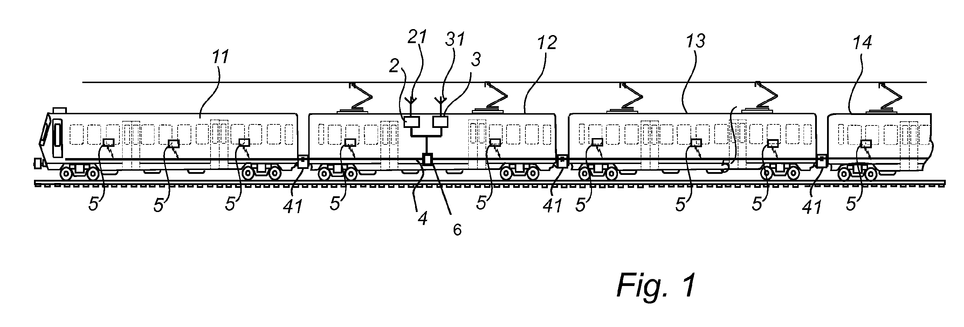

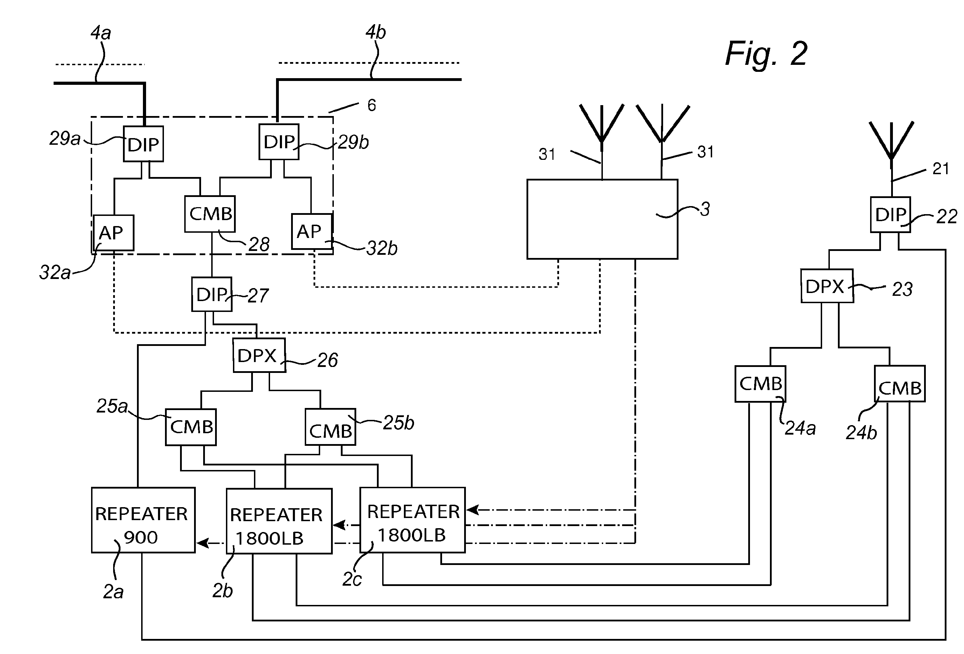

In Fig 1 a schematic illustration of a train having a wireless communication system is provided. The train set comprises four carriages 11-14. The wireless train communication system comprises a repeater unit 2 for receiving and transmitting wireless voice communication, connected to an antenna 21 on the train roof, and a data communication router 3 for receiving and transmitting wireless data communication, connected to an antenna 31 also arranged on the train roof. Preferably, as is illustrated in Fig. 2, the data communication router 3 is connected to at least two antennas 31, for enabling MIMO and/or antenna diversity.

The repeater unit 2 and the data communication router 3 are arranged in one of the carriages, and in the illustrated example in carriage 12.

The repeater unit 2 and the data communication router 3 are relatively small, and may be arranged essentially anywhere in the interior of the carriage. In a preferred embodiment, these units are arranged in an overhead compartment - a space which is rarely used much for other purposes.

The repeater unit 2 and the data communication router 3 are further connected to a common distributed antenna 4, such as a leaky feeder, or alternatively to distributed antennas extending in the rearward and forward direction of the train, respectively. The separation into a forward and rearward distributed antenna is in Fig. 1 schematically illustrated by a separation unit 6, which comprises several elements, as is discussed in more detail with reference to Fig. 2 in the following.

The distributed antenna(s) extends over all the four carriages 11-14 of the train and provides distributed access to the repeater unit and the data communication router to mobile terminals 5 in said carriages. The distributed antenna(s) preferably comprises a section for each carriage, and releasable connections 41 for connecting the sections between carriages.

The distributed antenna may be installed within the ceiling and/or the floor of the train carriages and may be installed alongside other wiring bundles in existing wiring harness channels in the carriages.

The repeater unit(s) is arranged to receive radio frequency signals in one or several frequency band(s), and to amplify and forward the received signals. Such repeater units are per se known in the art. The repeater unit(s) is preferably arranged to receive and transmit signals in frequency bands essentially only used for voice communication. For example, it is possible to limit the communication through the repeater unit(s) to only two frequency bands, such as the GSM frequency bands of 900 and 1800 MHz.

The data communication router may also be denominated MAR (Mobile Access Router) or MAAR (Mobile Access and Applications Router).

The data communication router is preferably arranged to communicate on at least two different communication routes having different characteristics. Hereby, the communication can be automatically optimized based on specific conditions, such as price, speed, etc. Such data communication routers are known from EP 1 175 757 by the same applicant, said document hereby incorporated by reference. Such routers are also commercially available from the applicant, Icomera AB. Hereby, the router may use all available data channels, such as two or more of e.g. GSM, Satellite, DVB-T, HSPA, EDGE, 1X RTT, EVDO, LTE, WiFi (802.11) and WiMAX; and combine them into one virtual network connection. An automatic selection is then made among the available channels to use the most cost effective combination that fulfils the users' availability, bandwidth and reliability requirements. Hence, a seamless distribution of the data among said different channels is obtained.

The distributed antenna(s) is preferably a leaky feeder. However, other realizations of the distributed antenna are possible. Several such alternative realizations are disclosed in US 2007/0176840, said document hereby incorporated by reference. For example, the distributed antenna may be a coaxial cable having apertures distributed along an outer shield of the cable.

The distributed antenna(s) provides a uniformly distributed electric field, and minimizes multi-path effects of propagation-induced modes in the system, regardless of the receiver's location with respect to the source antenna. The antenna allow radiated energy to leak from the cable or waveguide antenna and form low-power, localized electric fields that can couple receivers and transmitters to the antenna.

Further, because the distributed antenna generates a plurality of low-power electric fields rather than a single, high-power electric field, the overall power requirements for the antenna are lowered.

The distributed antenna typically provides transmission to and from the passenger terminals in a very broad frequency range, such as in the range of 80 MHz - 2.5 GHz.

The present invention provides a centralized system, having a central with one or several repeater units and a mobile access router in one carriage, and a distributed access to said units in several carriages. The distributed antenna forms a very long access point instead of the present solution with multiple, separately operated access points.

The system may further comprise a GPS transmitter connected to the at least one distributed antenna, to provide distributed access to the GPS transmitter to mobile terminals in the carriages. Still further, it is also possible to provide a FM radio receiver connected to the at least one distributed antenna, to provide distributed access to the FM radio receiver to mobile terminals in the carriages.

It is also possible to have one of the units supervising the operation and function of the other units. For example, the data communication router may be arranged to supervise the function of the repeater unit(s). Hereby, the operation of the repeater unit(s) may be monitored and supervised in real-time, and information may be sent to one or several supervisors, such as the operators, either continuously, at certain time periods or when something extraordinary, such as a malfunction, occurs.

A more detailed embodiment of the communication system is illustrated in Fig. 2. As detailed in Fig. 2, the data communication router comprises a router 3 connected to an externally arranged antenna 31. The router is further connected, e.g. through wireless communication to two access points 32a and 32b.

The repeater units comprises an externally arranged antenna 21 connected to a diplex filter (DIP) 22, arranged to divide the received signal into different predetermined frequency bands. One output signal from the DIP 22 is connected to a first repeater 2a, dedicated to the GSM 900 frequency band. Another output signal from the DIP 22 is connected to a duplex filter (DPX) 23, arranged to separate the received signals of the GSM 1800 frequency bands into two sub-bands. The two output signals from the DPX 23 are separated further in a first and second combiner 24a, 24b, and the separated signals from each combiner 24a, 24b are forwarded to a second repeater 2b and a third repeater 2c, respectively. The second and third repeaters are dedicated to the GSM 1800 frequency band. The combiners combine or split a signal from one to two signals, or vice versa, but the entire signal remains on both sides.

The first repeater 2a is further connected to a DIP 27. The second and third repeaters 2b, 2c are both connected to two combiners 25a, 25b, which in turn are connected to a DPX 26. The DPX 26 is connected to the DIP 27. The DIP 27 is connected to a combiner 28.

The combiner 28 and the first access point 32a are both connected to a DIP 29a, which in turn is connected to a first branch of the distributed antenna 4a. Similarly, the combiner 28 and the second access point 32b are connected to a DIP 29b, which in turn is connected to a second branch of the distributed antenna 4b.

Signals are forwarded in both direction through the communication system, i.e. both from the distributed antennas 4a, 4b to the external antennas 21, 31, and from the external antennas 21, 31 to the distributed antennas 4a, 4b.

The router 3 is further in contact with the repeaters 2a-2c, thereby enabling supervision and monitoring of the repeaters through the router.

The communication system may be installed into existing train carriages to upgrade previously existing systems. In this case, part of the existing system, such as repeaters and/or routers may possibly be reused in the new communication system. Alternatively, the system may be installed into new train carriages, allowing more systems and functions to be incorporated into the system without having to eliminate any pre-existing system components.

The invention has now been described with reference to specific embodiments. However, several variations of the communication system are feasible. For example, the number of repeaters may be varied, and be dedicated to other frequency bands. Further, it is possible to use a distributed antenna having one branch, two branches, or even more than two branches. Further, the communication system may be provided with other wireless transmitting and receiving units, such as GPS units, FM radio units, etc. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A wireless train communication system, comprising:
at least one repeater unit for receiving and transmitting wireless voice communication;
a data communication router for receiving and transmitting wireless data communication; and
at least one distributed antenna extending over several carriages of said train,
wherein said distributed antenna is connected to said repeater unit and said data communication router for providing distributed access to said repeater unit and said data communication router to mobile terminals in said carriages.

2. The wireless train communication system of claim 1, wherein the distributed antenna is a leaky feeder.

3. The wireless train communication system of any one of the preceding claims, wherein the distributed antenna comprises a section for each carriage, and releasable connections for connecting the sections between carriages.

4. The wireless train communication system of any one of the preceding claims, wherein the at least one repeater unit is arranged to receive and transmit wireless voice communication on said distributed antenna in frequency bands essentially only used for voice communication.

5. The wireless train communication system of any one of the preceding claims, wherein the at least one repeater unit is arranged to receive and transmit wireless voice communication on said distributed antenna in only two frequency bands.

6. The wireless train communication system of any one of the preceding claims, wherein the at least one repeater unit is arranged to receive and transmit wireless voice communication only in the GSM frequency bands of 900 and 1800 MHz.

7. The wireless train communication system of any one of the preceding claims, comprising two distributed antennas, one extending in the forward direction of the train and one extending in the rearward direction of the train.

8. The wireless train communication system of any one of the preceding claims, wherein the at least one distributed antenna has a length in the range of 20-100 m, and preferably in the range 30-70 m, and most preferably in the range 40-60 m.

9. The wireless train communication system of any one of the preceding claims, wherein said at least one distributed antenna extends over at least two carriages, and preferably extends over at least four carriages.

10. The wireless train communication system of any one of the preceding claims, further comprising at least one antenna arranged externally on the train connected to the at least one repeater unit, and at least one antenna arranged externally on the train connected to the data communication router.

11. The wireless train communication system of claim 10, comprising at least two antennas arranged externally on the train connected to the data communication router.

12. The wireless train communication system of any one of the preceding claims, further being adapted to receive GPS signals, and to forward said GPS signals to the at least one distributed antenna, wherein said distributed antenna provides distributed access to said GPS signals to mobile terminals in said carriages.

13. The wireless train communication system of any one of the preceding claims, further being arranged to receive FM radio signals, and to forward said FM radio signals to the at least one distributed antenna, wherein said distributed antenna provides distributed access to said FM radio signals to mobile terminals in said carriages.

14. The wireless train communication system of any one of the preceding claims, wherein the data communication router is arranged to communicate on at least two different communication routes having different characteristics, and preferably to automatically separate the data traffic between said communication routes based on specific optimization conditions, such as price and/or speed.

15. The wireless train communication system of any one of the preceding claims, wherein the data communication router is further arranged to supervise the function of the at least one repeater unit.
